# EUROPEAN PATENT SPECIFICATION

(11) **EP 4 157 795 B1**
(45) Date of publication and mention of the grant of the patent: **11.12.2024**
(21) Application number: 20732768.5
(22) Date of filing: 01.06.2020
(51) Int. Cl.: C01D 7/12

(54) **A TWO STAGES EXTRACTION METHOD FOR SYNTHESIZING PRECIPITATED CALCIUM CARBONATE**
ZWEI-STUFIGES EXTRAKTIONSVERFAHREN ZUR HERSTELLUNG VON PRÄZIPITIERTEM CALCIUMCARBONAT
MÉTHODE D'EXTRACTION EN DEUX ÉTAPES POUR SYNTHÉTISER DU CARBONATE DE CALCIUM PRÉCIPITÉ

(43) Date of publication of application: 05.04.2023
(73) Proprietor: R-S OSA SERVICE OÜ, 11415 Tallinn (EE)
(72) Inventor: MOHAMED, Hussain Azeez, 191 29 Sollentuna (SE); SALUSTE, Alar, 11415 Tallinn (EE); UIBU, Mai, 12616 Tallinn (EE); TRIKKEL, Andres, 12616 Tallinn (EE); KUUSIK, Rein, 12616 Tallinn (EE); GREGOR, Andre, 12616 Tallinn (EE); MÕTLEP, Riho, 50411 Tartu (EE); KIRSIMÄE, Kalle, 50411 Tartu (EE)
(74) Representative: AAA Patendibüroo OÜ
(86) International application number: PCT/EP2020/065110
(87) International publication number: WO 2021/244728

(56) References cited:
- WO-A1-2015/097674
- CN-A- 106 048 709
- TAMILSELVI DANANJAYAN RUSHENDRA REVATHY ET AL: "Direct mineral carbonation of coal fly ash for CO2sequestration", JOURNAL OF CLEANER PRODUCTION, ELSEVIER, AMSTERDAM, NL, vol. 112, 25 June 2015 (2015-06-25), pages 4173 - 4182, XP029358806, ISSN: 0959-6526, DOI: 10.1016/J.JCLEPRO.2015.05.145
- ELONEVA S ET AL: "Fixation of CO"2 by carbonating calcium derived from blast furnace slag", ENERGY, ELSEVIER, AMSTERDAM, NL, vol. 33, no. 9, 1 September 2008 (2008-09-01), pages 1461 - 1467, XP023172250, ISSN: 0360-5442, [retrieved on 20080626], DOI: 10.1016/J.ENERGY.2008.05.003

## Description

### Background of the Invention

### Field of the Invention

Since the art describes the extraction of calcium from waste or industrial by-products, in an aqueous media; the field of invention relates to hydrometallurgy.

Present invention relates to a method and a process of synthesizing high purity calcium carbonate precipitate from waste or by-products bearing calcium compounds. Said materials are inorganic and alkaline in nature; typical examples are oil shale ash, coal ash, steelmaking slags and waste cement.

### Description of Related Art

1) Growing demand on world's energy resources and countries' ambition to achieve energy independence has resulted in many nations opting for low calorific sources for energy. For instance, in Estonia, approximately 15 million tonnes of oil shale is mined per annum, for use in their energy sector¹. Consequently, it is estimated that around 7 million tonnes of calcium rich, highly alkaline waste material is generated yearly. Data shows that of the oil shale ash generated, only a minute amount (approximately 3%) is re-used while the rest is deposited in open land without treatment².
2) Similarly, wastes generated from industries such as iron and steelmaking produce vast amounts of calcium rich inorganic materials that are used in industries as; an aggregate in construction, a soil stabilizer in road construction, and liming material. As per Yu & Wang³, approximately for a ton of steel produced, around 0,13-0,2 ton of slag is produced. In addition, in 2018 for every tonne of steel produced on average 1,85 tonnes of carbon dioxide were emitted⁴.
3) After water, concrete is the most widely used material globally, as it is the main material used in infrastructure installations. With this high consumption of concrete, large amounts of concrete based waste are produced. For instance, more than 900 million tonnes of concrete waste per year are produced in Europe, USA and Japan combined; where Europe alone contributes 510 million tonnes to this figure'. Portland cement, the binding agent in 98% of the concrete produced globally, is highly alkaline (pH 12-13) and comprises of more than 60w/w% calcium oxide⁶.
4) Around the world, precipitated calcium carbonate is produced from a variety of high purity calcium feedstock by; carbonation process, Solvay method, lime-soda process, calcitech process or filler recycling process⁷. Of these processes, carbonation is the most widely used method. Traditionally, in the carbonation process, the calcium carbonate is precipitated by passing carbon dioxide through an aqueous suspension of calcium hydroxide. The calcium hydroxide used here is formed by mixing an aqueous solution and burnt lime (CaO). Burnt lime is a product of calcination of mined limestone. Preparation of mined feedstock for calcination and the calcination process itself are all energy intensive processes that are well documented to have a large carbon footprint⁸.
5) Various articles on the subject of utilizing oil shale ash for calcium carbonate production and carbon dioxide capture have been previously published by Tallinn University of Technology (TalTech)^{9,10,11}. In summary, the experiments conducted by the TalTech team presents results for various aspects of a two stage method for the production of precipitated calcium carbonate from oil shale ash; i) calcium ion leaching from ash using water and ii) carbonation of the leachate in a continuous flow disintegrator-reactor accompanied by the crystallization of calcium carbonate. Contrary to the present invention, all the experiments were performed under atmospheric pressure. In the series of tests conducted the researchers have claimed to have successfully produced, calcite crystals that has 92-99% calcium carbonate and a mean particle diameter in the range of 3,7-7,5 µm. Even though, the preceding tests were successful, in producing high-grade calcium carbonate crystals, the tested processes will probably not be commercially viable. Methods that employ water, as the only calcium extracting agent will require large quantities of water and therefore also an increased amount of energy for pumping and heating. This disadvantage is attributed to the low solubility exhibited by calcium compounds in water.
6) An article by Eloneva et al.¹² describes a method for producing precipitated calcium carbonate from steelmaking slag using ammonium salt (e.g. ammonium acetate, ammonium nitrate and ammonium chloride) as the calcium extraction agent. In the experiments described, the extracted calcium solution is bubbled with carbon dioxide to produce calcium carbonate precipitate. Here, the ammonium salt is recovered and reused in the calcium extraction stage. Patent EP 2294233B1¹³ describes an extended setup for this process and proposes a method to recover vanadium from the residual slag. In this invention, the extraction of calcium is carried out using ammonium acetate solution. The residual material is subjected to further treatment using a solution of ammonium dihydrogen phosphate ((NH₄)H₂PO₄) to subsequently produce a vanadium rich solution and a vanadium lean solid residue. The patent claims that he vanadium-enriched filtrate can be subjected to electrolysis, to produce metallic vanadium. Despite the similarities to the first stage of the present art, patent EP 2294233B1¹³ will require relatively larger amounts of ammonium-based solutions that are expensive to purchase as well as to treat and handle. In addition, the use of such chemicals is often associated with a larger carbon footprint.
7) Research work conducted by lizuka A. et al.¹⁴, describes a two stage method for the sequestration of carbon dioxide using waste cement. In an article later published by the researchers, they explore the potential to employ the same method for the production of high purity calcium carbonate¹⁵. Primarily, the described method comprises of two steps; extracting of calcium ions from waste cement in a water slurry using pressurized carbon dioxide, followed by the precipitation of calcium carbonate, from the extracted solution, by reducing the carbon dioxide pressure. The team claims that the process can produce calcium carbonate as pure as 98%. The paper does not reveal any other quality related parameters for the synthesized calcium carbonate. It is noted that the described art will likely be less efficient with materials that contain significant concentrations of free or reactive calcium compounds (such as free lime, portlandite and C₂S). This is due to two reasons; when carbon dioxide is introduced into the water slurry containing calcium,
   a) the dissolved carbon dioxide will instantly react with free calcium ions, filming the outer layers of particles, to form a calcium carbonate shell in individual grains. This calcium carbonate coating will inhibit the leaching of calcium ions within the material matrix, resulting in low calcium ion extraction.
   b) the free calcium ions already dissolved in solution will instantly react with carbon dioxide to precipitate calcium carbonate in the extraction reactor. Since calcium carbonate is a rather stable compound, the probability of liberating many of the precipitated calcium back into solution is low. This will result in less calcium ions in the leachate directed to the precipitation reactor.
8) Patent WO2006008242A1¹⁶, assigned to Shell Internationale, describes an invention for producing calcium carbonate or magnesium carbonate from a feedstock of calcium or magnesium containing metal oxides wherein: stage i) an aqueous slurry of the feedstock is contacted with carbon dioxide containing gas to form an aqueous solution of Ca(HCO₃)₂ or Mg(HCO₃)₂ under pressure, stage ii) the aqueous solution is separated from the solid residue and calcium carbonate or magnesium carbonate is precipitated by lowering the pressure. Two other patents WO2007069902A1¹⁷ and WO2010107320A1¹⁸ assigned to the Norwegian Institute for Energy Technology also describes, in principal similar steps, to produce magnesium carbonate (from olivine compounds) and calcium carbonate (from carbonate rocks) respectively. Since the process steps described in all the three patents are similar, albeit some differences, to the lizuka A. et al.¹⁵ proposal, discussed previously; the drawbacks in these inventions are expected to be the same.

### Overview of the invention

The disclosed invention aims to address some of the main issues present in industries, that produces calcium rich, waste and by-products. By adapting the disclosed invention, the extraction of finite material resources is reduced, achieving a degree of circularity in industries that utilize precipitated calcium carbonate. Methods and processes employed in present invention have the dual advantage of valorizing the utilized waste streams, while simultaneously, capturing and reducing the carbon dioxide emission. For this reason, the methods presented here can be categorized as a carbon capture and utilization (CCU) technology.

The present invention aims to provide a method for synthesizing high purity calcium carbonate precipitate by utilizing calcium bearing waste and byproducts, originating from industries, thereby reducing the extraction of virgin materials for the purpose. Simultaneously, the method aims to utilize carbon dioxide, from industrial waste gases or otherwise, to produce carbonic acid (H₂CO₃) that is in turn used as the agent for extracting calcium ions from the calcium bearing minerals. By employing said extraction method, the disclosed invention, aims to reduce the quantity of chemical reagents used in the process, thereby reducing the; environmental impact, carbon footprint and expenditures, directly associated with the operation of a plant applying the described technology.

As evident from the descriptions of prior art, there exists a number of methods and processes that are intended to produce high purity calcium carbonate precipitate. The majority of existing methods, for producing precipitated calcium carbonate, utilize virgin material, as the calcium source, subsequently avoiding the complexities that comes with using highly heterogeneous industrial by-products. While using traditional materials and methods have advantages, the production of burnt lime, the main raw material used in conventional processes, is a very energy intensive process⁸. Also, the material used for burnt lime production are calcium carbonate minerals such as marble, limestone and chalk. Even though these are abundant minerals, the required grade for high-quality precipitated calcium carbonate product are found in limited sites. The present invention addresses these issues and proposes the use of secondary raw materials from industries as a substitute for mined calcium carbonate minerals to produce high-grade calcium carbonate precipitate.

In instances prior inventions describe the application of carbon dioxide pressurized systems for production of calcium carbonate precipitate, the input raw materials used are resources with insignificant concentrations of reactive calcium compounds, such as waste cement and naturally occurring calcium carbonate minerals. For reasons previously stated, the existing prior technologies are expected to exhibit low efficiency with materials that contain free or reactive calcium compounds, in significant concentrations, such as oil shale ash from energy generation and steelmaking slag. The disclosed invention addresses this issue, to improve the efficiency, by introducing a novel process arrangement whereby; in the first extraction stage most of the free and reactive calcium compounds are removed from the calcium bearing material, using an aqueous ammonium solution or water, prior to subjecting the same material to a second extraction stage; where the calcium ions are extracted by utilizing carbonic acid produced by passing carbon dioxide into water in a pressurized environment. By removing the free calcium oxide and other reactive calcium compounds, from the material, prior to the introduction of carbon dioxide into the aqueous solution, the calcium carbonate coatings that will form otherwise around the material grains can be avoided. This will noticeably increase the probability for calcium bound within the matrixes to leach out into the solution, thereby improving the extraction efficiency.

The disclosed methods and processes have following advantages,
i. reduced chemical consumption per unit mass of calcium carbonate precipitate produced.
ii. reduced overall; operational expenditure, water treatment costs and carbon footprint, owing to the low use of chemicals.
iii. increased extraction efficiency in materials that contain significant amounts of reactive and free calcium compounds such as; free lime, portlandite and C₂S.
iv. produce a commercially viable product, i.e. high purity precipitated calcium carbonate, from industrial waste or by-products, thereby reducing virgin material mining, extraction and use.
v. carbon dioxide originating from industries can be captured and utilized (CCU).
vi. reduced alkalinity, heavy metal and salt concentration in the solid residual material left from the process.

### Brief Description of the Drawings

FIG 1 depicts the principal embodiment of the present invention.
FIG 2 depicts the second embodiment of the present invention, whereby the first few process steps in principal embodiment (later described as steps 1-4), that relates to the removal of free and reactive calcium compounds, are absent.
FIG 3 depicts the third embodiment of the present invention, whereby additional steps are presented for further improving the quality of precipitated calcium carbonate produced via the other embodiments.

### Detailed description of the Invention

In order to achieve the aims, of the disclosed invention, the following technical process is employed: a method for synthesizing high purity precipitated calcium carbonate by utilizing,
Stage i) an ammonium based aqueous solution or water to dissolve the calcium ions from the free and reactive calcium phases, in the material; followed by the removal of solids from the calcium rich aqueous solution, prior to the introduction of carbon dioxide gas into the said solution to precipitate calcium carbonate. The solid residue is then subjected to a second calcium extraction stage whereby,
Stage ii) carbonic acid, produced by increased carbon dioxide partial pressure in a water containing reactor, is used as the extraction solvent; followed by the removal of solids from the calcium rich aqueous solution, after which the precipitation of calcium carbonate is induced by decreasing the carbon dioxide partial pressure.

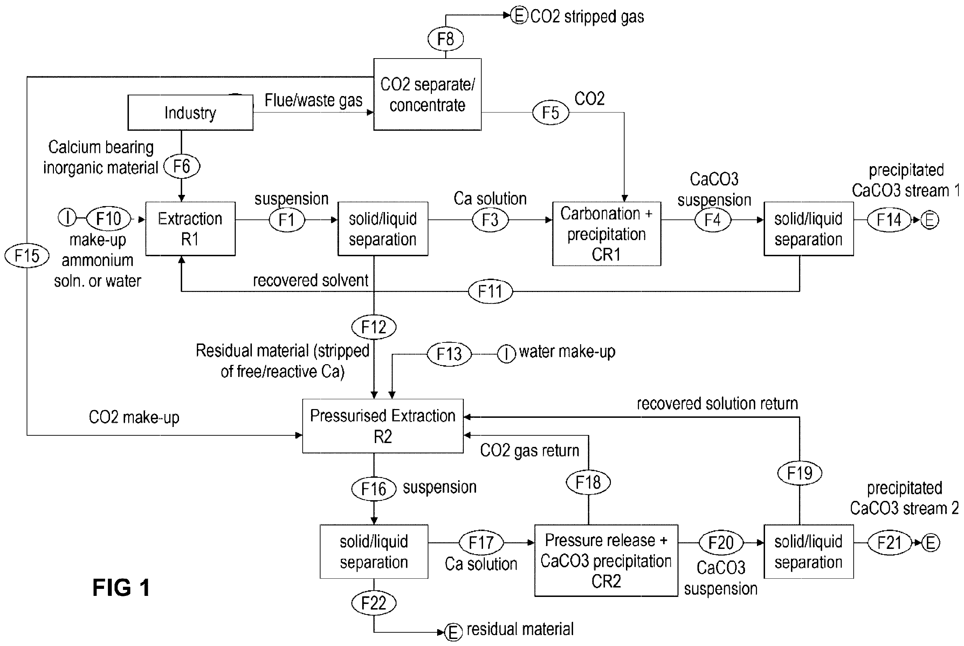

The principal embodiment of the invention comprises, the following steps (ref FIG 1).
Step 1. Feed solid calcium bearing material into the extraction solution (in reactor- R1). The objective of this step is to remove the reactive and free calcium compounds that can lower the efficiency of the second extraction stage.
   For the first calcium dissolution step; the favored solution and the preferred operational parameters is influenced by several factors. Under optimum operational conditions, maximum amount of calcium ions will leach out, from the calcium bearing material, by using minimum energy and least amount of chemical. The conditions shall also, discourage leaching of elements, such as iron and manganese, which are known to have a detrimental effect on the end product quality. Furthermore, the selected conditions shall avoid jelling of silicates, which can complicate the operation.
   The extraction process is carried out using an aqueous ammonium-based aqueous solution or water. The said ammonium-based solution is either; ammonium acetate (CH₃COONH₄), ammonium chloride (NH₄Cl) or any other ammonium-based aqueous solution, but preferably ammonium chloride (NH₄Cl) and most preferably ammonium acetate (CH₃COONH₄). Ammonium solutions can selectively extract calcium ions, in many minerals, without dissolving contaminants (such as salts, iron and manganese), which may coprecipitate with the calcium carbonate in the carbonation and precipitation step.
   The material utilized for extraction can be any alkaline, calcium bearing compound but preferably is a material deemed to be an industrial waste or by-product; and can be sourced either directly or indirectly from; production, landfills, deposits and/or stockpiles. Examples of such materials are oil shale ash from energy or oil and gas generation, coal ash, iron and steelmaking slags, and waste cement (from building industry). The most preferable material, from these examples, for the disclosed invention is, oil shale ash from energy or oil and gas generation. The material shall be fine grained with a nominal grain size of; preferably < 1000µm, more preferably <500µm and most preferably <200µm. Materials with larger sized particles are preferably; mechanically sieved or more preferably mechanically comminuted in a dry environment.
   Lower temperatures will improve the ultimate amount of calcium ions that can be extracted from the material but will also, inevitably lower the dissolution rate. The temperature in the extraction reactor shall be within the range 3°C-100°C but preferably within the range 15°C -80°C. The most preferable temperature range for dissolution is 25°C-70°C.
   The solid to liquid ratio in the extraction reactor is between the range 1:1-1:20, preferably between 1:1-1:10 but most preferably between 1:1-1:5.
   The molarity, of the extraction solvent, in the extraction reactor is preferably between the range 0,1M-3M but most preferably within the range 1,5-2M.
   At the end of the dissolution stage, the resulting mixture has a pH range between 8,0-13. The reactor used in this stage is a continuously stirred reactor.
Step 2. Separate the solid residual material from the calcium rich solution. The selected separation method will depend on grain size, grain distribution and the density of residual material. The separation technique may involve one of, or a combination of some or all the methods: sedimentation, centrifugation, decanting, filtration, reverse osmosis.
   Residual material from this step is directed to a separate reactor (R2) for a second calcium extraction stage. The calcium rich solution is subjected to carbonation to precipitate calcium carbonate (in reactor CR1).
Step 3. In reactor CR1, the carbonation is induced by introducing carbon dioxide gas directly into the calcium containing aqueous solution. The carbon dioxide will hydrolyze to form bi-carbonates that will dissociate to a carbonate and hydrogen ion. The carbonate ion will readily react with the calcium ions in solution to form calcium carbonate precipitate.
   Carbon dioxide gas hydration reaction 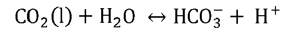
   Calcium carbonate crystal formation: 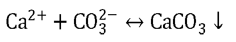
   Calcium carbonate redissolution:

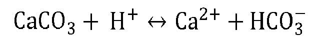

   It is noted that, carbon dioxide dissolution in water is dependent on pH. Carbon dioxide dissolving in water will mainly form CO₃²⁻ at pH>9 and HCO₃⁻ at pH<9. Therefore, in theory, the maximum amount of calcium carbonate crystals will form around pH 9¹⁰. In the present invention, the solution into which carbon dioxide is introduced, is not pure water, hence the optimal pH level for maximum crystal formation is different. In the present invention, to avoid back dissolution of calcium carbonate crystals, the pH of the solution shall be pH>7,5 but most preferably pH>8.
   The carbon dioxide is introduced into the calcium containing solution either by bubbling or spraying. The temperature during carbonation is kept between 3°C-80°C but preferably between 15°C-60°C; and most preferably within the range 25°C-45°C. Carbon dioxide utilized for carbonation can be either carbon dioxide or preferably carbon dioxide containing waste gases (carbon dioxide> 5 vol%). More preferably the carbon dioxide gas originates from industries such as oil shale thermal plants but most preferably this gas is also separated, purified and concentrated before use.
Step 4. Separate the calcium carbonate precipitate from solution. The selected separation method will depend on grain size, grain distribution and the density of precipitate. The separation technique may involve one of, or a combination of some or all the methods: sedimentation, centrifugation, decanting, filtration, reverse osmosis.
   The ammonium based aqueous solution is recovered and directed, to R1 reactor, for use in Step 1: calcium extraction.
Step 5. Residual material from Step 2 is directed to the extraction reactor R2, where a second calcium extraction step takes place.
   The residual material from Step 2 (depleted of free and reactive calcium) is transferred to the second extraction reactor- R2 containing water to achieve: preferably a solid to liquid ratio 1:1-1:20, more preferably between 1:1-1:10 but most preferably between 1:2-1:5. Then carbon dioxide gas is introduced into solution until a predefined pressure is reached and carbonic acid is formed.

      CO₂ (g) + H₂O → H₂CO₃ 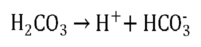 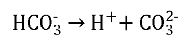
   The gas utilized here is either carbon dioxide gas or carbon dioxide containing gases; preferably carbon dioxide gas separated, purified and concentrated from carbon dioxide containing waste gases originating from industrial sources. The carbon dioxide content in the gas is preferably >50 vol%, more preferably >70 vol% and most preferably >90 vol%. To improve solubility of carbon dioxide, the partial pressure of the gas within the closed reactor is increased to preferably 1-20MPa, more preferably 2-15MPa and most preferably from 5-15MPa.
   Two opposing thermodynamic and kinetic effects occur when the temperature is increased in the process. With increased temperature the calcium solubility in the aqueous system decreases but the rate of dissolution increases. Taking this into account, the preferred temperature, in the reactor, is in the range 3°C-150°C, the more preferred range is 30-80°C.
   When the residual material reacts with carbonic acid, the calcium bound to silica and other compounds, leaches out into the aqueous phase. Since calcium has relatively low solubility in water, the prescribed method significantly improves the calcium solubility.
      CaO·X + 2H⁺→ Ca²⁺ + H₂O + X; X=Si, Mg and Al compounds, salts etc.
   The reactor used in this stage is a continuously stirred reactor.
Step 6. Separate the residual material from solution while still under carbon dioxide pressure. Selected separation method will depend on system pressure, grain size, grain distribution and the density of residual material. The separation technique may involve one of, or a combination of some or all the methods: sedimentation, centrifugation, decanting, filtration, reverse osmosis.
   A single batch of residue can be subjected to more than one calcium extraction cycle (i.e. from Step 5 to Step 6).
Step 7. Direct the aqueous calcium rich solution to the precipitation reactor-CR2 and release the carbon dioxide pressure to precipitate calcium carbonate. 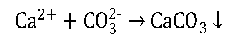 When the carbon dioxide partial pressure is lowered, the carbon dioxide dissolved in water phase reacts with free calcium ions to precipitate calcium carbonate. Unreacted carbon dioxide escaping from the reactor is directed to a gas storage vessel for re-use in the previous Step 3 and/or Step 5. Preferably the pressure in the reactor is reduced to a range between 0,1-7MPa, more preferably between 0,1-4MPa and most preferably between 0,1-2MPa, to induce precipitation. The temperature in the reactor in preferably increased to the range 20°C-180°C but the more preferred range is 20-200°C.
Step 8. Separate the calcium carbonate precipitate from solution. The separation technique may involve one of, or a combination of some or all the methods: sedimentation, centrifugation, decanting, filtration, reverse osmosis. The recovered solution is re-circulated back into the extraction reactor-R2 to utilize in carbonic acid production process.
   If desired, the calcium carbonate precipitate produced from the second carbonation stage can have different physical properties, in comparison to the precipitate from the first carbonation stage. This can be achieved by varying the operational parameters (temperature, carbonation duration, carbonation rate, carbon dioxide bubble size etc.) in the carbonation reactors. This would indicate that the described technology can simultaneously produce, precipitated calcium carbonate exhibiting different physical properties.
   The precipitated calcium carbonate produced from both streams are characterized by; a fine-grained, white colored powder with a calcium carbonate content >95w/w% and an average particle diameter 0,05-10µm. The iron-III-oxide (Fe₂O₃) concentration is <0,2 w/w% and the Hunter Whiteness Index is >85%.
   The residual material from the process (Step 6) are characterized by; a fine-grained, light grey colored powder. The silica oxide and magnesium oxide concentration in the material is >45w/w% and >15w/w% respectively.

As further improvement, to the present invention, the precipitate of calcium carbonate is washed with water and de-watered to obtain a dry precipitated calcium carbonate product. Similarly, the residual material is washed with water and de-watered. The ammonium salts, in the washed solution, are concentrated by distillation or more preferably by membrane separation; and re-used in the calcium extraction process (reactor R1). This will reduce the loss of ammonium solvents from the system.

As further improvement, to the present invention, the ferromagnetic material in residue (from Step 6 and/or Step 2) will be isolated using; an aqueous chemical agent and/or a magnetic method and then processed.

As further improvement, of present invention, the calcium bearing material is subjected to a pre-processing step prior to Step 1; or in another embodiment before Step 9. The pre-processing step involves extraction of ferromagnetic fraction in the dry material by utilizing dry magnetic extraction methods. The aim of this step is to remove the ferromagnetic material, in particular iron, so that during the subsequent calcium extraction steps, less contaminants will leach into solution; and ultimately end up in the calcium carbonate product.

As further improvement of the present invention, seed crystals are introduced during the calcium carbonate precipitation steps 3, 7 and/or 11. The aim is to influence the nucleation process (transition from solute in solution to calcium carbonate crystals) and the subsequent physical properties of the final product. It is known that the rate and duration of nucleation influences the physical properties of the calcium carbonate precipitate formed. The said properties may include; particle size, size distribution, morphology, crystal growth mechanism etc^{19,20}. The choice of seed crystals, introduced into the precipitation reactor, will depend on the preferred properties of the precipitated calcium carbonate crystals.

As further improvement, of present invention, the residual material from Step 6 can be further processed, to utilize as a substitute for silica minerals in industries.

As further improvement, of present invention, the residual material from Step 6 can be directly landfilled or backfilled as inert material.

As further improvement, of present invention, the residual material from Step 6 can be utilized in cement and/or concrete production with no or minimal pre-treatment.

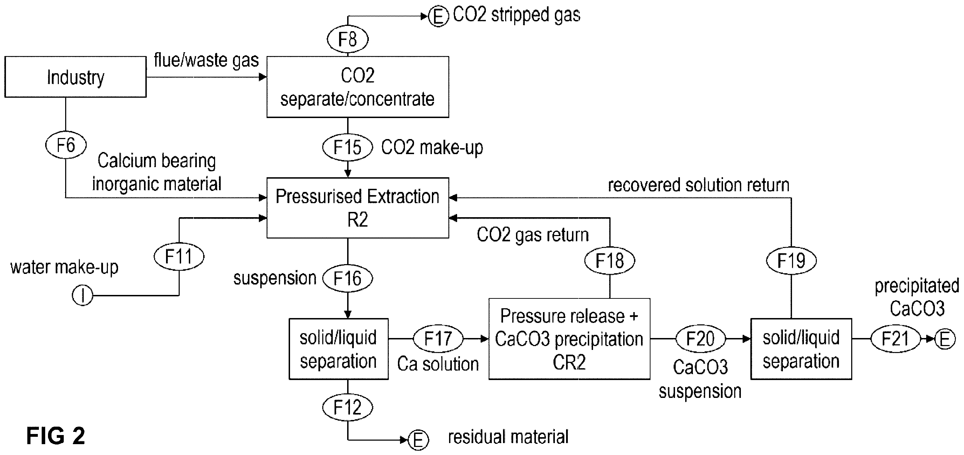

In another embodiment of the present invention (ref FIG 2); the process arrangement excludes Steps 1-4; which describes the processes related to the extraction of free and reactive calcium compounds. Essentially, this process embodiment does not utilize any chemicals for calcium extraction and totally relies on carbonic acid, produced from carbon dioxide's interaction with water under pressure, for the purpose. The arrangement is targeted for materials that contain no or insignificant concentrations of free and reactive calcium compounds. Examples of such material include oil shale ash derived from oil and gas production (from oil shale) and waste cement.

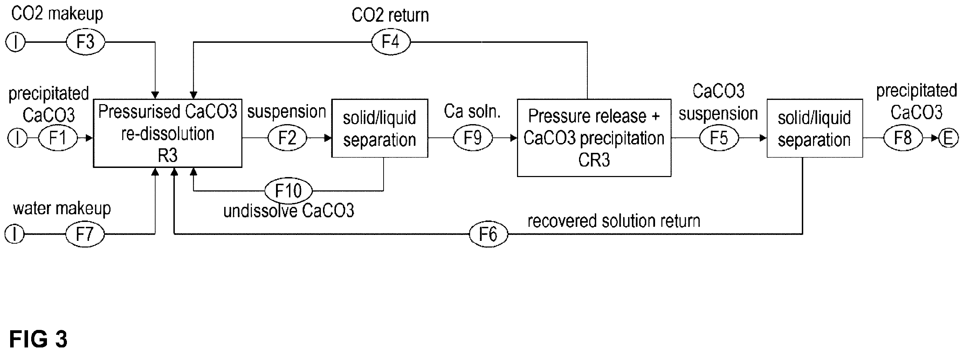

In another embodiment of the present invention (ref FIG 3) the calcium carbonate precipitate from any of the previous embodiments, or any other processes, is subjected to redissolution followed by controlled precipitation, to obtain a precipitated calcium carbonate product with pre-specified properties. This embodiment in principal is an extension to the processes in the previous embodiments, and involves the following steps,
Step 9. The wet precipitate from Step 4 and/or Step 8 is introduced into the redissolution reactor- R3 containing water, to achieve: preferably a solid to liquid ratio 1:1-1:20, more preferably between 1:1-1:10 but most preferably between 1:2-1:5. Introduce carbon dioxide gas into solution until a predefined pressure is reached and carbonic acid is formed.
   The gas used here is either carbon dioxide gas or carbon dioxide containing gas; preferably carbon dioxide gas purified and concentrated from carbon dioxide containing gases originating from industrial sources. To enhance the solubility of carbon dioxide, the partial pressure of the gas, within the closed reactor, is developed to preferably 2-17MPa but more preferably 5-17MPa. The preferred temperature, in the reactor, is in the range 3°C-150°C, the more preferred range is 30-80°C.
   The reactor used in this stage is a continuously stirred reactor.
Step 10. Separate the undissolved calcium carbonate from solution while still under carbon dioxide pressure. The separation technique may involve one of, or a combination of some or all the methods: sedimentation, centrifugation, decanting, filtration, reverse osmosis. The undissolved solids are transferred back to the reactor R3 for redissolution.
Step 11. Direct the aqueous calcium rich solution to the precipitation reactor (CR3) and release the carbon dioxide pressure to precipitate high purity calcium carbonate. Unreacted carbon dioxide escaping from the chamber is directed to gas storage vessel for re-use in the previous Step 3, Step 5 and/or Step 9. The physical conditions (temperature, pressure) within the precipitation reactor is determined based on the prespecified physical properties of the crystals.
Step 12. Separate the calcium carbonate precipitate from solution. The separation technique may involve one of, or a combination of some or all the methods: sedimentation, centrifugation, decanting, filtration, reverse osmosis.
   The recovered solution is re-circulated back into the redissolution reactor-R3.
Step 13. The precipitated calcium carbonate is further processed by, but not limited to, washing with water and then de-watering to obtain a dry product.

### References

1. Kearns J, Tuohy E, Tuohy E. Trends in Estonian oil shale utilization. 2015;(October):22. http://www.digar.ee/id/nlib-digar:268094.
2. Estonian Environment Agency. Estonian Environmental Review 2013. 2014. https://www.keskkonnaagentuur.ee/en/estonian-environmental-review-2013-1.
3. Yu J, Wang K. Study on characteristics of steel slag for CO2 capture. Energy and Fuels. 2011;25(11):5483-5492. doi:10.1021/ef2004255
4. World Steel Association. Steel's Contribution to a Low Carbon Future and Climate Resilient Societies. World Steel Assoc. 2015:1-6. http://www.worldsteel.org/dms/internetDocumentList/bookshop/Steels-Contribution-to-a-Low-Carbon-Future-/document/Steel's Contribution to a Low Carbon Future .pdf.
5. Wimala M, Parahyangan UK. Environmental Impact of Waste Concrete Treatment in Precast Concrete Production. 2017;(July 2011).
6. Bernal SA, Rodríguez ED, Kirchheim AP, Provis JL. Management and valorisation of wastes through use in producing alkali-activated cement materials. J Chem Technol Biotechnol. 2016;91(9):2365-2388. doi:10.1002/jctb.4927
7. Stratton P. An Overview of the North American Calcium Carbonate Market. https://roskill.com/wp/wp-content/uploads/2014/11/download-roskills-paper-on-the-north-american-calcium-carbonate-market.attachment1.pdf. Published 2012. Accessed January 20, 2020.
8. Sagastume Gutiérrez A, Cogollos Martinez JB, Vandecasteele C. Energy and exergy assessments of a lime shaft kiln. Appl Therm Eng. 2013;51(1-2):273-280. doi:10.1016/j.applthermaleng.2012.07.013
9. Velts O, Uibu M, Kallas J, Kuusik R. CO2 mineral trapping: Modeling of calcium carbonate precipitation in a semi-batch reactor. Energy Procedia. 2011;4:771-778. doi:10.1016/j.egypro.2011.01.118
10. Velts O, Uibu M, Kallas J, Kuusik R. CO2 Mineralisation: Concept for Co-utilization of Oil Shale Energetics Waste Streams in CaCO3 Production. Energy Procedia. 2013;37(January 2016):5921-5928. doi:10.1016/j.egypro.2013.06.518
11. Velts O, Kindsigo M, Uibu M, Kallas J, Kuusik R. CO2 Mineralisation: Production of CaCO3-type Material in a Continuous Flow Disintegrator-reactor. Energy Procedia. 2014;63:5904-5911. doi:10.1016/j.egypro.2014.11.625
12. Eloneva S, Said A, Fogelholm CJ, Zevenhoven R. Preliminary assessment of a method utilizing carbon dioxide and steelmaking slags to produce precipitated calcium carbonate. Appl Energy. 2012;90(1):329-334. doi:10.1016/j.apenergy.2011.05.045
13. Teir S, Eloneva S, Revitzer H, Zevenhoven R, Salminen J, Fogelholm C-J. Method of Producing Calcium Carbonate From Waste and Byproducts. 2017:1-14.
14. lizuka A, Fujii M, Yamasaki A, Yanagisawa Y. Development of a new CO2 sequestration process utilizing the carbonation of waste cement. Ind Eng Chem Res. 2004;43(24):7880-7887. doi:10.1021/ie0496176
15. Katsuyama Y, Yamasaki A, lizuka A, Fujii M, Kumagai K, Yanagisawa Y. Development of a process for producing high-purity calcium carbonate (CaCO3) from waste cement using pressurized CO2. Environ Prog. 2005;24(2):162-170. doi:10.1002/ep.10080
16. Cornelis JJ, Franciscus GA, Maria BC. Process for Producing CaCO3 or MgCO3. 2006.
17. Gorset O, Johansen H, Kihle J, Munz IA, Raaheim A. Method for Industrial Manufacture of Pure MgCO3 from an Olivine Containing Species of Rock. 2007.
18. Anne Munz I, Raaheim A, Johansen H, Kihle J, Brandvoll Ö, Korneliussen A. Method for Industrial Manufacture of Precipitated Calcium Carbonate (CaCO3) from Carbonate Bearing Rock. 2010.
19. Sathyagal AN, McCormick A V. Effect of nucleation profile on particle-size distribution. AIChE J. 1998;44(10):2312-2323. doi:10.1002/aic.690441020
20. Donnet M, Bowen P, Jongen N, Lemaitre J, Hofmann H. Use of seeds to control precipitation of calcium carbonate and determination of seed nature. Langmuir. 2005;21(1):100-108. doi:10.1021/la048525i

## Claims

1. A method for synthesizing precipitated calcium carbonate **characterized in that** the method comprises following steps:
Step 1) adding the solid, calcium bearing material, into a continuously stirred extraction solution (R1), said solid calcium bearing material being an oil shale ash from energy or oil and gas generation or iron and steelmaking slags or coal ash or waste cement;
Step 2) separating the solid residual material from the calcium rich solution;
Step 3) subjecting the calcium rich solution from step 2 to carbonation (CR1) for precipitating calcium carbonate, wherein carbonation is induced by introducing carbon dioxide gas directly into the calcium containing aqueous solution (CR1);
Step 4) separating the calcium carbonate precipitate from solution, recovering the extraction solution and directing it to said extraction solution (R1), for use in step 1;
Step 5) subjecting residual material from step 2 to a-second calcium extraction-(R2), where carbonic acid H₂CO₃ is used as the calcium extraction agent, wherein the said carbonic acid is produced by increasing carbon dioxide partial pressure within the extraction reactor for dissolving carbon dioxide in water;
Step 6) separating residual material from the aqueous calcium rich solution while still under pressure;
Step 7) subjecting the aqueous calcium rich solution to precipitation (CR2) by releasing the carbon dioxide pressure to precipitate calcium carbonate;
Step 8) separating the calcium carbonate precipitate from the solution; re-circulating the recovered solution back to said second calcium extraction (R2) in step 5.

2. A method according to claim 1, **wherein** the method comprises following steps after step 8:
Step 9) introducing the calcium carbonate precipitate from step 4 and/or step 8 into a continuously stirred redissolution solution (R3), where carbonic acid H₂CO₃ is used as the calcium carbonate dissolving agent, wherein the said carbonic acid is produced by increasing carbon dioxide partial pressure within said redissolution solution reactor (R3) for dissolving carbon dioxide in water;
Step 10) separating the undissolved calcium carbonate solids from aqueous calcium rich solution while still under carbon dioxide pressure; transferring the undissolved solids back to **said** redissolution solution (R3) for redissolution;
Step 11) subjecting the aqueous calcium rich solution to precipitation (CR3) by releasing the carbon dioxide pressure to precipitate calcium carbonate;
Step 12) separating the calcium carbonate precipitate from solution; re-circulating the recovered solution back into-said redissolution solution (R3) in step 9;
Step 13) processing the precipitated calcium carbonate further by washing with water and then de-watering to obtain a dry product.

3. A method according to claim 1, **wherein** the extraction solution is either water or an ammonium-based aqueous solution, preferably ammonium chloride NH₄Cl, most preferably ammonium acetate CH₃COONH₄.

4. A method according to claim 1, **wherein** said solid calcium bearing material has the nominal grain size <1000 µm, more preferably <500 µm and most preferably <200 µm; where preferable materials are mechanically sieved or more preferably mechanically comminuted in a dry environment.

5. A method according to claim 1, **wherein** in step 1 the solid to liquid ratio is between the range 1:1-1:20, preferably between 1:1-1:10, most preferably between 1:1-1:5; the molarity of extraction solvent is preferably within the range of 0,1-3M, most preferably within the range of 1,5-2M; the temperature is within the range of 3°C-100°C, preferably within the range of 15°C-80°C, most preferably within the range of 25°C-70°C; the pH of solution at the end of calcium extraction is between pH 8-13.

6. A method according to claim 1, **wherein** in step 3, the carbon dioxide is introduced into the calcium containing solution by bubbling or spraying and the temperature in the solution is between 3°C-80°C, preferably between 15°C-60°C, most preferably between 25°C-45°C; and the pH is >7,5, more preferably the pH is >8.

7. A method according to claim 1, **wherein** in step 3, carbon dioxide is present in an amount of >5vol% of gas, where gas preferably originates from industrial waste gases, and where most preferably the carbon dioxide in the industrial waste gases is separated, purified and concentrated before use.

8. A method according to claim 1, **wherein** in step 5 the residual material from step 2 is transferred to the second calcium extraction (R2) containing water to achieve preferably a solid to liquid ratio between 1:1-1:20, more preferably between 1:1-1:10, most preferably between 1:2-1:5; and wherein for producing carbonic acid in solution, carbon dioxide gas is introduced into solution until a carbon dioxide partial pressure of 1-20MPa, more preferably 2-15MPa, most preferably 5-15MPa is reached; the preferred temperature, in the reactor, is in the range of 3°C-150°C, more preferably in the range of 30°C-80°C.

9. A method according to claims 1-8, **wherein** in step 7 during said precipitation (CR2), the pressure is reduced to a range preferably between 0,1-7MPa, more preferably between 0,1-4MPa, most preferably between 0,1-2MPa; and where the temperature is preferably in the range of 20°C-180°C, more preferably 20°C -200°C.

10. A method according to claims 1-9, **wherein** the precipitated calcium carbonate produced is **characterized by** a calcium carbonate content >95 w/w%, an average particle diameter 0,05-10µm; an iron-III-oxide (Fe₂O₃) Fe₂O₃ concentration <0,2 w/w% and Hunter Whiteness Index >85%.

11. A method according to claim 1-9, **wherein** in the residual material from step 6, the silica oxide and magnesium oxide concentration is >45w/w% and >15 w/w% respectively.

12. A method according to claim 1-9, **wherein** the precipitate of calcium carbonate and the residual material is washed with water and de-watered; the ammonium salt in the washed solution is concentrated by distillation or more preferably by membrane separation and re-used in the calcium extraction process in step 1 in **the** continuously stirred extraction solution (R1).

13. A method according to claims 1-11, **wherein** the ferromagnetic material in residue from step 2 and/or step 6 is isolated using an aqueous chemical agent and/or a magnetic method and then processed.

14. A method according to claim 2, **wherein** in step 9, the solid to liquid ratio is preferably 1:1-1:20, more preferably between 1:1-1:10 and most preferably between 1:2-1:5; the carbon dioxide partial pressure is preferably 2-17 MPa, more preferably 5-17 MPa; and the temperature is preferably in the range of 3°C-150°C, more preferably in the range of 30-80°C.

15. A method according to claims 1-14 **wherein** in step 5 and step 9 carbon dioxide is present in an amount preferably >50 vol%, more preferably >70 vol% and most preferably >90 vol%, and where gas preferably originates from industrial waste gases, and where most preferably the carbon dioxide in the industrial waste gases is separated, purified and concentrated before use.

16. A method according to claims 1-15, **wherein** in steps 3, 7 and 11, seed crystals are introduced into the reactor for initiating and influencing the crystal formation process.

17. A method according to claims 1-16, **wherein** in steps 2, 4, 6, 8, 10 and 12 separation technique may involve one of, or a combination of some or all the methods from: sedimentation, centrifugation, decanting, filtration, reverse osmosis.

## Patentansprüche

1. Verfahren zum Synthetisieren von ausgefälltem Calciumcarbonat, **dadurch gekennzeichnet, dass** das Verfahren folgende Schritte umfasst:
Schritt 1) Hinzufügen des festen calciumhaltigen Materials zu einer kontinuierlich gerührten Extraktionslösung (R1), wobei es sich bei dem festen calciumhaltigen Material um Ölschieferasche aus Energie- oder Öl- und Gaserzeugung oder um Schlacken aus der Eisen- und Stahlherstellung oder um Kohlenasche oder um Zementabfall handelt;
Schritt 2) Abtrennen des festen Restmaterials von der Calciumreichen Lösung;
Schritt 3) Unterziehen der calciumreichen Lösung aus Schritt 2 einer Karbonatisierung (CR1) zum Ausfällen von Calciumcarbonat, wobei Karbonatisierung durch Einbringen von Kohlendioxidgas direkt in die Calciumhaltige wässrige Lösung (CR1) herbeigeführt wird;
Schritt 4) Abtrennen des Calciumcarbonatniederschlags von der Lösung, Rückgewinnen der Extraktionslösung und Leiten derselben in die Extraktionslösung (R1) zur Verwendung in Schritt 1;
Schritt 5) Unterziehen des Restmaterials aus Schritt 2 einer zweiten Calciumextraktion (R2), wobei Kohlensäure H₂CO₃ als Calciumextraktionsmittel verwendet wird, wobei die Kohlensäure durch Erhöhen des Kohlendioxidpartialdrucks innerhalb des Extraktionsreaktors zum Lösen von Kohlendioxid in Wasser erzeugt wird;
Schritt 6) Abtrennen von Restmaterial von der wässrigen calciumreichen Lösung, während sie noch unter Druck steht;
Schritt 7) Unterziehen der wässrigen Calciumreichen Lösung einer Ausfällung (CR2) durch Ablassen des Kohlendioxiddrucks, um Calciumcarbonat auszufällen;
Schritt 8) Abtrennen des Calciumcarbonatniederschlags von der Lösung; Rückführen der zurückgewonnenen Lösung zurück zu der zweiten Calciumextraktion (R2) in Schritt 5.

2. Verfahren nach Anspruch 1, **wobei** das Verfahren folgende Schritte nach Schritt 8 umfasst: Schritt 9) Einbringen des Calciumcarbonatniederschlags aus Schritt 4 und/oder Schritt 8 in eine kontinuierlich gerührte Rücklösungslösung (R3), wobei Kohlensäure H₂CO₃ als Calciumcarbonat-Lösungsmittel verwendet wird, wobei die Kohlensäure durch Erhöhen eines Kohlendioxidpartialdrucks innerhalb des Rücklösungsreaktors (R3) zum Auflösen von Kohlendioxid in Wasser erzeugt wird;
Schritt 10) Abtrennen der ungelösten Calciumcarbonatfeststoffe von der wässrigen calciumreichen Lösung, während sie noch immer unter Kohlendioxiddruck steht; Überführen der ungelösten Feststoffe zurück in die Rücklösungslösung (R3) zur erneuten Auflösung;
Schritt 11) Unterziehen der wässrigen Calciumreichen Lösung einer Ausfällung (CR3) durch Ablassen des Kohlendioxiddrucks, um Calciumcarbonat auszufällen;
Schritt 12) Abtrennen des Calciumcarbonatniederschlags von der Lösung; Rückführen der gewonnenen Lösung zurück in die Rücklösungslösung (R3) in Schritt 9;
Schritt 13) Weiterverarbeiten des ausgefällten Calciumcarbonats durch Waschen mit Wasser und anschließendes Entwässern, um ein trockenes Produkt zu erhalten.

3. Verfahren nach Anspruch 1, **wobei** die Extraktionslösung entweder Wasser oder eine wässrige Lösung auf Ammoniakbasis ist, vorzugsweise Ammoniumchlorid NH₄Cl, besonders bevorzugt Ammoniumacetat CH₃COONH₄.

4. Verfahren nach Anspruch 1, **wobei** das feste calciumhaltige Material die nominale Korngröße <1000 µm, bevorzugter <500 µm und besonders bevorzugt <200 µm aufweist; wobei Materialien vorzugsweise mechanisch gesiebt oder bevorzugter in einer trockenen Umgebung mechanisch zerkleinert werden.

5. Verfahren nach Anspruch 1, **wobei** in Schritt 1 das Feststoff-Flüssigkeits-Verhältnis im Bereich von 1:1-1:20, vorzugsweise zwischen 1:1-1:10, besonders bevorzugt zwischen 1:1-1:5 liegt; die Molarität des Extraktionslösungsmittels vorzugsweise im Bereich von 0,1-3 M, besonders bevorzugt im Bereich von 1,5-2 M liegt; die Temperatur im Bereich von 3 °C-100 °C, vorzugsweise im Bereich von 15 °C-80 °C, besonders bevorzugt im Bereich von 25 °C-70 °C liegt; der pH-Wert der Lösung am Ende der Calciumextraktion zwischen pH-Wert 8-13 liegt.

6. Verfahren nach Anspruch 1, **wobei** in Schritt 3 das Kohlendioxid durch Blasenbildung oder Sprühen in die calciumhaltige Lösung eingebracht wird und die Temperatur in der Lösung zwischen 3 °C-80 °C, vorzugsweise zwischen 15 °C-60 °C, besonders bevorzugt zwischen 25 °C-45 °C liegt; und der pH-Wert >7,5 ist, bevorzugter der pH-Wert >8 ist.

7. Verfahren nach Anspruch 1, **wobei** in Schritt 3 Kohlendioxid in einer Menge von >5 Vol.-% Gas vorliegt, wobei das Gas vorzugsweise aus industriellen Abgasen stammt und wobei das Kohlendioxid in den industriellen Abgasen besonders bevorzugt vor Verwendung abgetrennt, gereinigt und konzentriert wird.

8. Verfahren nach Anspruch 1, **wobei** in Schritt 5 das Restmaterial aus Schritt 2 in die zweite wasserhaltige Calciumextraktion (R2) überführt wird, um vorzugsweise ein Feststoff-Flüssigkeits-Verhältnis zwischen 1:1-1:20, bevorzugter zwischen 1:1-1:10, besonders bevorzugt zwischen 1:2-1:5 zu erreichen; und wobei zum Erzeugen von Kohlensäure in Lösung Kohlendioxidgas in die Lösung eingebracht wird, bis ein Kohlendioxidpartialdruck von 1-20 MPa, bevorzugter 2-15 MPa, besonders bevorzugt 5-15 MPa erreicht ist; die bevorzugte Temperatur im Reaktor im Bereich von 3°C-150°C, bevorzugter im Bereich von 30°C-80°C liegt.

9. Verfahren nach Ansprüchen 1-8, **wobei** in Schritt 7 während der Ausfällung (CR2) der Druck auf einen Bereich von vorzugsweise 0,1-7 MPa, bevorzugter 0,1-4 MPa und besonders bevorzugt 0,1-2 MPa reduziert wird; und wobei die Temperatur vorzugsweise im Bereich von 20 °C-180 °C, bevorzugter 20 °C-200 °C liegt.

10. Verfahren nach Ansprüchen 1-9, **wobei** das erzeugte ausgefällte Calciumcarbonat durch einen Calciumcarbonatgehalt >95 Gew./Gew.-%, einen durchschnittlichen Partikeldurchmesser 0,05-10 µm; eine Eisen-III-oxid (Fe₂O₃) Fe₂O₃-Konzentration < 0,2 Gew./Gew.-% und einen Hunter-Whiteness-Index >85% gekennzeichnet ist.

11. Verfahren nach Anspruch 1-9, **wobei** in dem Restmaterial aus Schritt 6 die Konzentration von Siliziumoxid und Magnesiumoxid >45 Gew./Gew.-% bzw. > 15 Gew./Gew.-% beträgt.

12. Verfahren nach Anspruch 1-9, **wobei** der Calciumcarbonatniederschlag und das Restmaterial mit Wasser gewaschen und entwässert werden; das Ammoniumsalz in der gewaschenen Lösung durch Destillation oder bevorzugter durch Membrantrennung konzentriert und im Calciumextraktionsprozess in Schritt 1 in der kontinuierlich gerührten Extraktionslösung (R1) erneut verwendet wird.

13. Verfahren nach Ansprüchen 1-11, **wobei** das ferromagnetische Material im Rückstand aus Schritt 2 und/oder Schritt 6 mit einem wässrigen chemischen Mittel und/oder einem magnetischen Verfahren isoliert und anschließend verarbeitet wird.

14. Verfahren nach Anspruch 2, **wobei** in Schritt 9 das Feststoff-Flüssigkeits-Verhältnis vorzugsweise 1:1-1:20, bevorzugter zwischen 1:1-1:10 und besonders bevorzugt zwischen 1:2-1:5 beträgt; der Kohlendioxidpartialdruck vorzugsweise 2-17 MPa, bevorzugter 5-17 MPa beträgt; und die Temperatur vorzugsweise im Bereich von 3 °C-150 °C, bevorzugter im Bereich von 30-80 °C liegt.

15. Verfahren nach Ansprüchen 1-14, **wobei** in Schritt 5 und Schritt 9 Kohlendioxid in einer Menge von vorzugsweise >50 Vol.-%, bevorzugter >70 Vol.-% und besonders bevorzugt >90 Vol.-% vorhanden ist und wobei Gas vorzugsweise aus industriellen Abgasen stammt und wobei das Kohlendioxid in den industriellen Abgasen besonders bevorzugt vor Verwendung abgetrennt, gereinigt und konzentriert wird.

16. Verfahren nach Ansprüchen 1-15, **wobei** in Schritten 3, 7 und 11 Impfkristalle in den Reaktor eingebracht werden, um den Kristallbildungsprozess einzuleiten und zu beeinflussen.

17. Verfahren nach Ansprüchen 1-16, **wobei** in Schritten 2, 4, 6, 8, 10 und 12 eine Abtrenntechnik eines der folgenden Verfahren oder eine Kombination aus einigen oder allen der folgenden Verfahren beinhalten kann: Sedimentation, Zentrifugation, Dekantieren, Filtration, Umkehrosmose.

## Revendications

1. Procédé de synthèse de carbonate de calcium précipité **caractérisé en ce que** le procédé comprend les étapes suivantes :
l'étape 1) consistant à ajouter la matière solide contenant du calcium dans une solution d'extraction agitée en continu (R1), ladite matière solide contenant du calcium étant des cendres de schiste bitumineux provenant de la production d'énergie ou de pétrole et de gaz ou des scories de sidérurgie ou de cendres de charbon ou des déchets de ciment ;
l'étape 2) consistant à séparer la matière résiduelle solide de la solution riche en calcium ;
l'étape 3) consistant à soumettre la solution riche en calcium de l'étape 2 à une carbonatation (CR1) pour précipiter du carbonate de calcium, dans lequel la carbonatation est induite en introduisant du dioxyde de carbone gazeux directement dans la solution aqueuse contenant du calcium (CR1) ;
l'étape 4) consistant à séparer le précipité de carbonate de calcium de la solution, à récupérer la solution d'extraction et à la diriger vers ladite solution d'extraction (R1), pour une utilisation dans l'étape 1 ;
l'étape 5) consistant à soumettre la matière résiduelle de l'étape 2 à une seconde extraction du calcium (R2), dans laquelle l'acide carbonique H₂CO₃ est utilisé comme agent d'extraction du calcium, dans lequel ledit acide carbonique est produit en augmentant la pression partielle de dioxyde de carbone à l'intérieur du réacteur d'extraction pour dissoudre le dioxyde de carbone dans l'eau ;
l'étape 6) consistant à séparer la matière résiduelle de la solution aqueuse riche en calcium tout en restant sous pression ;
l'étape 7) consistant à soumettre la solution aqueuse riche en calcium à une précipitation (CR2) en relâchant la pression du dioxyde de carbone pour précipiter le carbonate de calcium ;
l'étape 8) consistant à séparer le précipité de carbonate de calcium de la solution ; à faire recirculer la solution récupérée vers ladite seconde extraction de calcium (R2) à l'étape 5.

2. Procédé selon la revendication 1, **dans** lequel le procédé comprend les étapes suivantes après l'étape 8 : l'étape 9) consistant à introduire le précipité de carbonate de calcium issu de l'étape 4 et/ou de l'étape 8 dans une solution de redissolution (R3) agitée en continu, dans laquelle l'acide carbonique H₂CO₃ est utilisé comme agent de dissolution du carbonate de calcium, dans lequel ledit acide carbonique est produit en augmentant la pression partielle du dioxyde de carbone à l'intérieur dudit réacteur de solution de redissolution (R3) pour dissoudre le dioxyde de carbone dans l'eau ;
l'étape 10) consistant à séparer les solides de carbonate de calcium non dissous d'une solution aqueuse riche en calcium tout en restant sous pression de dioxyde de carbone ; à transférer les solides non dissous vers ladite solution de redissolution (R3) pour une redissolution ;
l'étape 11) consistant à soumettre la solution aqueuse riche en calcium à une précipitation (CR3) en relâchant la pression du dioxyde de carbone pour précipiter le carbonate de calcium ;
l'étape 12) consistant à séparer le précipité de carbonate de calcium de la solution ; à faire recirculer la solution récupérée dans ladite solution de redissolution (R3) à l'étape 9 ;
l'étape 13) consistant à traiter le carbonate de calcium précipité en outre par lavage à l'eau et, ensuite, par déshydratation pour obtenir un produit sec.

3. Procédé selon la revendication 1, **dans** lequel la solution d'extraction est soit de l'eau, soit une solution aqueuse à base d'ammonium, de préférence du chlorure d'ammonium NH₄Cl, le plus préférentiellement de l'acétate d'ammonium CH₃COONH₄.

4. Procédé selon la revendication 1, **dans** lequel ladite matière solide contenant du calcium présente une granulométrie nominale < 1000 µm, plus préférentiellement < 500 µm et le plus préférentiellement < 200 µm ; dans lequel des matières préférables sont tamisées mécaniquement ou, plus préférentiellement, broyées mécaniquement dans un environnement sec.

5. Procédé selon la revendication 1, **dans** lequel, à l'étape 1, le rapport solide/liquide est entre la plage 1:1-1:20, de préférence entre 1:1-1:10, plus préférentiellement 1:1-1:5 ; la molarité du solvant d'extraction est, de préférence, **dans** la plage 0,1-3 M, le plus préférentiellement 1,5-2 M ; la température est dans la plage de 3°C-100°C, de préférence dans la plage de 15°C-80°C, le plus préférentiellement dans la plage de 25°C-70°C ; le pH de la solution à la fin de l'extraction du calcium est entre pH 8-13.

6. Procédé selon la revendication 1, **dans** lequel, à l'étape 3, le dioxyde de carbone est introduit dans la solution contenant du calcium par barbotage ou pulvérisation et la température dans la solution est entre 3°C-80°C, de préférence entre 15°C-60°C, le plus préférentiellement entre 25°C-45°C ; et le pH est > 7,5, plus préférentiellement le pH est > 8.

7. Procédé selon la revendication 1, **dans** lequel, à l'étape 3, le dioxyde de carbone est présent en une quantité de >5 % en volume de gaz, dans lequel le gaz provient, de préférence, de gaz résiduaires industriels et dans lequel, le plus préférentiellement, le dioxyde de carbone dans les gaz résiduaires industriels est séparé, purifié et concentré avant utilisation.

8. Procédé selon la revendication 1, **dans** lequel, à l'étape 5, la matière résiduelle de l'étape 2 est transférée à la seconde extraction de calcium (R2) contenant de l'eau pour obtenir, de préférence, un rapport solide/liquide entre 1:1-1:20, plus préférentiellement entre 1:1-1:10, le plus préférentiellement entre 1:2 1:5 ; et dans lequel, pour produire de l'acide carbonique en solution, du dioxyde de carbone gazeux est introduit dans la solution jusqu'à ce qu'une pression partielle de dioxyde de carbone de 1-20 MPa, plus préférentiellement 2-15 MPa, le plus préférentiellement 5-15 MPa, soit atteinte ; la température préférée, dans le réacteur, est dans la plage de 3°C-150°C, plus préférentiellement dans la plage de 30°C-80°C.

9. Procédé selon les revendications 1-8, **dans** lequel, à l'étape 7, pendant ladite précipitation (CR2), la pression est réduite à une plage, de préférence, entre 0,1-7 MPa, plus préférentiellement entre 0,1-4 MPa, le plus préférentiellement entre 0,1-2 MPa ; et dans lequel la température est, de préférence, dans la plage de 20°C-180°C, plus préférentiellement 20°C-200°C.

10. Procédé selon les revendications 1-9, **dans** lequel le carbonate de calcium précipité produit est **caractérisé par** une teneur en carbonate de calcium > 95 % en poids/poids, un diamètre moyen de particule de 0,05 à 10 µm ; une concentration en oxyde de fer III (Fe₂O₃) Fe₂O₃ < 0,2 % en poids/poids et un indice de blancheur Hunter > 85 %.

11. Procédé selon les revendications 1-9, **dans** lequel, dans la matière résiduelle de l'étape 6, la concentration en oxyde de silice et en oxyde de magnésium est respectivement > 45 % en poids/poids et > 15 % en poids/poids.

12. Procédé selon les revendications 1-9, **dans** lequel le précipité de carbonate de calcium et la matière résiduelle sont lavés avec de l'eau et déshydratés ; le sel d'ammonium dans la solution lavée est concentré par distillation ou, plus préférentiellement, par séparation membranaire et réutilisé dans le processus d'extraction du calcium à l'étape 1 dans la solution d'extraction (R1) agitée en continu.

13. Procédé selon les revendications 1-11, **dans** lequel la matière ferromagnétique dans le résidu de l'étape 2 et/ou l'étape 6 est isolée à l'aide d'un agent chimique aqueux et/ou d'un procédé magnétique et, ensuite, traitée.

14. Procédé selon la revendication 2, **dans** lequel, à l'étape 9, le rapport solide/liquide est, de préférence, 1:1-1:20, plus préférentiellement 1:1-1:10 et le plus préférentiellement 1:2-1:5 ; la pression partielle du dioxyde de carbone est, de préférence, 2-17 MPa, plus préférentiellement 5-17 MPa ; et la température est, de préférence, dans la plage de 3°C-150°C, plus préférentiellement dans la plage de 30-80°C.

15. Procédé selon les revendications 1-14, **dans** lequel, à l'étape 5 et à l'étape 9, le dioxyde de carbone est présent en une quantité de préférence >50 % en volume, plus préférentiellement > 70 % en volume et le plus préférentiellement >90 % en volume, et dans lequel le gaz provient, de préférence, de gaz résiduaires industriels, et dans lequel, le plus préférentiellement, le dioxyde de carbone dans les gaz résiduaires industriels est séparé, purifié et concentré avant utilisation.

16. Procédé selon les revendications 1-15, **dans** lequel, aux étapes 3, 7 et 11, des germes de cristaux sont introduits dans le réacteur pour initier et influencer le processus de formation de cristaux.

17. Procédé selon les revendications 1-16, **dans** lequel, aux étapes 2, 4, 6, 8, 10 et 12, une technique de séparation peut impliquer l'un, ou une combinaison, de certains ou de tous les procédés suivants : la sédimentation, la centrifugation, la décantation, la filtration et l'osmose inverse.
